# EUROPÄISCHE PATENTSCHRIFT

(11) **EP 2 169 179 B1**
(45) Veröffentlichungstag und Bekanntmachung des Hinweises auf die Patenterteilung: **30.11.2011**
(21) Anmeldenummer: 09171183.8
(22) Anmeldetag: 24.09.2009
(51) Int. Cl.: E21B 47/04

(54) **Verfahren und Vorrichtung zur Erkennung der Spiegelteufe in einem Bohrloch**
Method and device for recognising the depth level in a bore hole
Procédé et dispositif de reconnaissance de la profondeur réfléchie dans un trou de forage

(30) Priorität: 25.09.2008 DE 102008048964
(43) Veröffentlichungstag der Anmeldung: 31.03.2010
(73) Patentinhaber: Rohöl - Aufsuchungs AG, 1015 Wien (AT)
(72) Erfinder: Zamow, Rainer, 29313 Hambühren (DE); Sonnleitner, Kurt, 4851 Gampern (AT)
(74) Vertreter: Einsel, Martin

(56) Entgegenhaltungen:
- DE-A1- 3 933 116
- US-A- 4 793 178
- US-A1- 2004 163 806
- US-A1- 2006 037 392

## Beschreibung

Die Erfindung betrifft ein Verfahren zur Erkennung der Lage einer Spiegelteufe in einem Bohrloch bei Tiefbohrungen, bei dem man an der Erdoberfläche ein akustisches Ereignis gezielt stattfinden lässt, welches akustische Ereignis Druckwellen erzeugt, bei dem die von dem Ereignis-erzeugten Druckwellen in dem Bohrloch in die Tiefe laufen, bei dem die in das Bohrloch laufenden Druckwellen zumindest auch an der Spiegelteufe reflektiert werden, bei dem an der Erdoberfläche aus dem Bohrloch dorthin laufende Druckwellen aufgefangen werden und die Laufzeit seit dem akustischen Ereignis gemessen werden, bei dem die aufgefangenen und gemessenen Druckwellen ausgewertet werden und zusammen mit der zugehörigen Laufzeit auf die Lage der Spiegelteufe geschlossen wird, und eine Vorrichtung zur Erkennung der Spiegelteufe in Bohrlöchern unter Einsatz eines derartigen Verfahrens.

Bohrlöcher dienen insbesondere zum Erschließen und Fördern von Rohöl oder Erdgas aus unterirdischen Lagerstätten. Diese erstrecken sich in horizontaler und vertikaler Richtung häufig über einen größeren Flächenbereich, sodass eine Vielzahl von Bohrlöchern für jede einzelne Lagerstätte eingesetzt wird, um das Rohöl oder das Erdgas aus den Lagerstätten zu gewinnen.

Jedes Bohrloch weist dabei eine Verrohrung aus einer Vielzahl von vertikal aneinander anschließenden einzelnen Rohren auf, die während des Einbringens des Bohrloches nacheinander eingebracht und aneinander angeschlossen werden. Diese Rohre der Verrohrung reichen bis zum Öl- oder Gasvorkommen herab und in dieses hinein.

Das bedeutet, dass sich im tiefsten Bereich des Bohrloches das gewünschte Medium, also insbesondere Rohöl oder Erdgas, befindet und gefördert werden kann. Zu diesem Zweck befinden sich in diesem Bereich Pumpen oder andere Fördereinrichtungen, die eine kontinuierliche oder diskontinuierliche Förderung innerhalb des Bohrloches nach oben herbeiführen. Für das so entnommene Medium strömen von den Seiten und von unten weitere Rohöl- oder Erdgasmengen nach. Außerdem sammeln sich in diesem tiefsten Bereich des Bohrloches auch Wasser und/oder andere Fluide. Die Oberfläche der Fluide zur Erdoberfläche wird als Spiegelteufe bezeichnet.

Die aneinander gesetzten Rohre der Verrohrung des Bohrloches sind so miteinander verbunden, dass eine relative dichte, mechanisch stabile Verbindung entsteht und insbesondere kein Sand und keine Flüssigkeiten durch die Bohrlochverrohrung in das Innere des Bohrloches gelangen kann. Die Rohre besitzen dabei zueinander Rohrverbindungen, also Verbindungsstellen, die durch die Muffen und Verbindungsringe entstehen. Die einzelnen Rohre sind im Wesentlichen etwa gleich lang.

Aus technischen Gründen sind häufig zwei konzentrisch ineinander geführte Verrohrungen vorgesehen. In einem inneren Rohr strömt das zu fördernde Rohöl beziehungsweise Erdgas nach oben und in einem außen um das innere Rohr konzentrisch herum liegenden Ringraum erfolgt unter Anderem ein Druckausgleich.

Die genaue Lage der Spiegelteufe in einem Bohrloch ist für eine Verbesserung des Fördervorgangs schon seit Langem von erheblichem Interesse. Es ist beispielsweise nicht gewünscht, dass der Ölpumpvorgang mehr Erdöl aus dem Bohrloch entnimmt, als in diesem Bohrloch aus der Lagerstätte nachströmen kann. Das Bohrloch würde dann im Endeffekt trocken fallen können. Ebenso ist es natürlich ein Bestreben, möglichst viel Rohöl oder Erdgas aus dem Bohrloch zu entnehmen. Da die Nachströmgeschwindigkeit für das Rohöl oder das Erdgas nicht gemessen werden kann und über die Betriebszeit eines Bohrloches auch in nicht vorhersehbarer Form schwankt, ist die exakte Lage der Spiegelteufe ein interessanter Wert. Nimmt die Spiegelteufe im Laufe der Zeit während mehrerer Beobachtungen jeweils ab, sinkt also der Flüssigkeitsspiegel, so wird offensichtlich mehr Rohöl oder Erdgas dem Bohrloch entnommen, als in das Bohrloch aus der Lagerstätte einströmen kann. Das wäre bei fortgesetzter Förderung möglicherweise gefährlich. Steigt dagegen die Spiegelteufe an, so bestünde die Möglichkeit, die Fördergeschwindigkeit zu erhöhen.

Die Lage der Spiegelteufe im Bohrloch kann natürlich viele hundert oder auch mehr als 1000 m tief sein und ist damit von der Erdoberfläche aus schlecht zu erkennen und zu ermitteln. Optische Messungen scheiden dadurch aus.

Für die Messung des Wasserpegels in einem Bohrloch, das als Brunnen zur Wasserförderung dient, wird in der DE 39 33 116 A1 eine akustische Messung vorgeschlagen. Ein Signal mit einer bekannten Frequenz wird in das Bohrloch nach unten gesendet und ein von der Oberfläche der Flüssigkeit reflektiertes, rückkehrendes Signal wird als Antwortsignal genutzt. Unter Berücksichtigung der Schallgeschwindigkeit kann der Flüssigkeitspegel ermittelt werden. Das Bohrloch darf dabei keine größeren Diskontinuitäten aufweisen, die als starker Reflektor für das ausgesandte Signal wirkt und daher zu einem gestörten Ergebnis führt. Die DE 39 33 116 A1 schlägt als weitere Modifikation eine Variation der Frequenz vor, um eine Resonanzfrequenz oder eine Antiresonanzfrequenz zu ermitteln und daraus dann auf die Lage des Wasserpegels zu schließen.

In der Praxis werden akustische Messungen vorgenommen, wie sie etwa in der US-PS 4,793,178 und der US-PS 4,934,186 sowie in Weiterentwicklungen auch in der US-PS 5,117,399 und der US-PS 5,200,894 beschrieben sind. Es wird an der Erdoberfläche im Bereich des Bohrloches eine Gaskanone abgefeuert und auf diese Weise ein akustischer Impuls erzeugt, der eine sehr steile und hohe Anfangsflanke aufweist.

Neben dem Abfeuern einer Gaskanone ist alternativ aus einem von der Friedrich Leutert GmbH & Co. KG unter der Bezeichnung "Acoustic Well Sounder AWS" angebotenen Gerät bekannt, einen Impuls durch Implosion zu erzeugen. Dieses Verfahren ist geeignet, wenn im Bohrloch ein Überdruck gegenüber der Umgebungsluft besteht. Hierzu wird der oberste Abschnitt der Verrohrung im Bohrloch durch ein auf der oberen und der unteren Seite absperrbares Rohr verschlossen. Im ersten Messschritt wird dann der obere Hahn geöffnet und das in dem Rohr enthaltene Gas entweicht in die Umgebung. Der obere Absperrhahn wird dann wiederum geschlossen. Danach wird der untere Absperrhahn im Bohrloch geöffnet und das im Bohrloch befindliche, unter Überdruck stehenden Gas tritt schlagartig in das Rohr ein. Dieses schlagartige Ausdehnen des im Bohrloch befindlichen Gases in das Rohr hinein erzeugt ebenfalls einen Impuls mit einer sehr steilen und hohen Anfangsflanke. Im nächsten Schritt wird dann wieder das jetzt im Rohr enthaltene Gas aus dem Bohrloch in die Umgebung abgegeben und die nächste Messung kann erfolgen.

Die von dem durch das Abfeuern der Gaskanone oder aber auch durch die beschriebene Implosion erzeugte Druckwelle läuft durch das Bohrloch hinab bis zur Spiegelteufe und wird dann wieder reflektiert. Sie unterliegt dabei den physikalischen Gesetzmäßigkeiten von Schallwellen.

Die Schallgeschwindigkeit in dem Bohrloch allerdings ist nicht bekannt, da sich im Bohrloch zwischen der Erdoberfläche und der Spiegelteufe eine komplizierte und auch mit der Zeit nicht konstante Gasmischung aus unter anderem Methan, Stickstoff, Kohlendioxid, Argon und vielen weiteren Gasen befindet, die sich keineswegs wie ein ideales Gas verhält und deren Zusammensetzung sich sowohl mit der Zeit als auch über die Tiefe des Bohrloches hin auch unvorhersehbar ändert. Das bedeutet, dass aus der Laufzeit einer Schallwelle nicht automatisch auf die Laufstrecke geschlossen werden kann und sich aus der Laufzeit der Schallwelle von der Erdoberfläche bis zur Spiegelteufe und nach Reflexion zurück zur Erdoberfläche noch keine quantitative Angabe über die zurückgelegte Wegstrecke treffen lässt. Die Spiegelteufe kann also nicht nur aus der Laufzeit heraus ermittelt werden.

An den einzelnen Verbindungsstellen der Rohre der Bohrlochverrohrung finden ebenfalls kleinere Reflexionen statt, sodass Teile der Schall- beziehungsweise Druckwelle schon vor der Reflexion an der Fluidoberfläche wieder reflektiert und oben an der Erdoberfläche durch ein entsprechendes Empfangsgerät aufgezeichnet werden können. Diese Wellen haben also eine kürzere Laufstrecke und damit auch eine kürzere Laufzeit.

Da die einzelnen Rohre jedoch wie erwähnt ungefähr gleich lang sind und die diskreten Reflexionen an den Verbindungskanten beobachtet werden können, ergeben sich vor dem Eintreffen der an der Spiegelteufe reflektierten Schallwelle eine ganze Reihe von Reflexionslinien von Schallwellen, die nur bis zu den einzelnen Rohrverbindungen, also den Verbindungsstellen zwischen den Rohren gelangt und dort reflektiert sind. Kann man diese reflektierten Schallwellen identifizieren und in dem Rauschen hinreichend deutlich erkennen, so kann durch Abzählen der Reflexionslinien bestimmt werden, wie viele Rohrverbindungslinien zwischen der Erdoberfläche am Bohrloch und der Spiegelteufe liegen. Mit einer bekannten durchschnittlichen Rohrlänge kann dann auf die ungefähre Lage der Spiegelteufe geschlossen werden und bei einem Vergleich mehrerer Messungen im zeitlichen Abstand kann auch in einer späteren Auswertung erkannt werden, ob die Spiegelteufe steigt oder fällt.

Problematisch ist, dass es Mehrfachreflexionen gibt, da jede an einer Verbindungsstelle reflektierte und aufwärts laufende Schallwelle an allen oberhalb liegenden Verbindungsstellen erneut teilweise reflektiert wird und diese zweifach reflektierten Schallwellen nach unten laufen und sich durch dann erneute Reflexion zusätzliche an der Erdoberfläche eintreffende drei- und mehrfach reflektierte Schallwellen ergeben, die die Identifizierung der tatsächlich interessierenden Reflexionslinien stören und erheblich erschweren. Es muss also sehr viel Sorgfalt darauf aufgewandt werden, ein möglichst sauberes erstes Schallereignis beim Abfeuern der Gaskanone zu erzielen, also eine möglichst steile und möglichst hohe Flanke zu erhalten, die eine spätere Identifizierung von gewünschten und nicht gewünschten Reflexionslinien ermöglicht.

Angesichts dieser komplizierten Situation wird in der US-PS 6,085,836 vorgeschlagen, drei getrennte Signalgeneratoren einzusetzen, die jeweils ein Signal einer bestimmten Frequenz abgeben, wobei sich die drei Frequenzen voneinander unterscheiden sollen. Diese drei Signalgeneratoren sollen die von ihnen erzeugten Schallwellen dann getrennt voneinander absenden, zum Einen innerhalb eines Bohrgestänges, dann außerhalb eines Bohrgestänges und schließlich noch in einem Ringraum. Durch das Empfangen der reflektierten Signale in den verschiedenen Bohrlochbereichen und die Zuordnung der monofrequenten Schallwellen zu den Ausgangssignalen wird erhofft, die Messergebnisse zu verbessern und die Messungen zuverlässiger zu gestalten. Der Aufwand für getrennt voneinander arbeitende und in getrennten Bereichen der Bohrlochquerschnitte arbeitende Signalgeneratoren ist erheblich. In der Praxis hat sich dieser Vorschlag nicht durchgesetzt.

Neben den schon erörterten Schwierigkeiten bei der Auswertung der reflektierten Schallwellen ist es wünschenswert, sämtliche Störgeräusche etwa durch laufende Förderpumpen und dergleichen zu vermeiden, die das Messergebnis ebenfalls beeinträchtigen oder verfälschen könnten. Es muss also bei derartigen Messungen mit Verfahren aus dem Stand der Technik der Bohrbetrieb für die Zeit der Messung in vielen Fällen unterbrochen werden.

Im praktischen Einsatz wird man eine derartige Geräteanordnung mit einer Gaskanone und einer Empfangseinrichtung sowie zugehöriger elektronischer Analyse- und Auswertungseinrichtung dann nacheinander an den verschiedenen Bohrlöchern eines Ölfeldes oder einer anderen Lagerstätte einsetzen. Die Auswertung erfolgt dann nach Abschluss aller Messungen weitgehend händisch. Aus den sich ergebenden Messwerten können dann Fachleute, sofern erforderlich, an den einzelnen Bohrlöchern Maßnahmen treffen, um beispielsweise die Förderrate neu einzustellen.

Trotz der grundsätzlichen Funktionsfähigkeit derartiger Verfahren besteht bei den Fachkreisen der Wunsch, diese Vorgehensweise kostengünstiger und sofern möglich auch schneller vornehmen zu können. Zu berücksichtigen ist dabei, dass für den Einsatz Fachkräfte über einen längeren Zeitraum benötigt werden, um eine Vielzahl von Bohrlöchern entsprechend durchzumessen und auszuwerten. Die Anordnungen aus dem Stand der Technik sind anspruchsvoll und müssen dort eingesetzt werden, wo die Bohrlöcher sind, was häufig in unwegsamem und in nicht verkehrsgünstig gelegenem Gelände der Fall ist.

Aufgabe der Erfindung ist es daher, ein gattungsgemäßes Verfahren und eine gattungsgemäße Vorrichtung vorzuschlagen, mit denen eine verbesserte oder vereinfachte Feststellung der Spiegelteufe in Bohrlöchern möglich ist.

Diese Aufgabe wird erfindungsgemäß bei einem gattungsgemäßen Verfahren dadurch gelöst, dass das akustische Ereignis ein Signalmuster mit einem vorgegebenen, zeitlich veränderlichen Frequenzspektrum erzeugt, dass das Signalmuster als Schwingungsereignis in das Bohrloch abgestrahlt wird, in die Tiefe läuft und reflektiert wird, dass an der Erdoberfläche aus dem Bohrloch stammende aufgefangene Signale analysiert werden, dass aus den aufgefangenen Signalen bei der Analyse Schwingungsereignisse herausgefiltert werden, die zu dem abgestrahlten Signalmuster korrelieren, und dass aus den zu dem ausgestrahlten Signalmuster korrelierenden Schwingungsereignissen unter den aufgefangenen Signalen und der Laufzeit seit der Ausstrahlung des Signalmusters auf die Lage der Spiegelteufe geschlossen wird.

Bei einer Vorrichtung wird diese Aufgabe erfindungsgemäß dadurch gelöst, dass an der Erdoberfläche eine schwingungsabgebende Einrichtung vorgesehen ist, die Signalmuster mit einem vorgegebenen, zeitlich veränderlichen Frequenzspektrum erzeugt und in das Bohrloch abstrahlt, dass eine Messeinrichtung zum Empfangen von aus dem Bohrloch stammenden Signalen angeordnet und aufgebaut ist, dass eine elektronische Analyseeinheit vorgesehen ist, die die von der Messeinrichtung aufgefangenen Signale analysiert und so aufgebaut ist, dass sie zu den abgestrahlten Signalmustern korrelierende Schwingungsereignisse ermittelt und aus diesen korrelierenden Schwingungsereignissen und der Laufzeit auf die Lage der Spiegelteufe schließt.

Mit einem Verfahren und/oder einer Vorrichtung gemäß der Erfindung wird es möglich, die Spiegelteufe an Öl- und Gasförderstellen oder bei anderen Tiefbohrungen kontinuierlich und automatisch zu messen und darzustellen. Mit einem derartigen Verfahren und/oder einer derartigen Vorrichtung entsteht eine kontinuierliche Kenntnis über das Verhalten der Spiegelteufe an einzelnen Förderstellen eines Erdöl- oder Erdgasfeldes. Diese kontinuierliche Kenntnis kann zur Optimierung der Ausbeute einen entscheidenden Beitrag leisten.

Das erfindungsgemäße Verfahren ebenso wie die erfindungsgemäße Vorrichtung sind nicht nur für die Förderung von Erdöl, Erdgas oder anderen insbesondere flüssigen oder gasförmigen Bodenschätzen für die Bestimmung der Lage der Spiegelteufe einsetzbar, sondern auch bei Anwendungen in der Geothermie. Auch dort ist es interessant, in Tiefbohrungen in den dort geschaffenen Bohrlöchern die Lage der Spiegelteufe zu bestimmen, da eine Beobachtung des Wasserspiegels auch für geothermische Anwendungen wichtig sein kann.

Auch bei anderen Einsatzfällen, bei denen in Bohrlöchern bei Tiefbohrungen die genaue Lage einer Grenzschicht zwischen einer Flüssigkeit und einem Gas von Interesse sein kann, können die erfindungsgemäßen Verfahren und Vorrichtungen eingesetzt werden.

Während die bisher angewandte Methode der Bestimmung der Lage der Spiegelteufe in den meisten Fällen jeweils manuell durch Personal vorgenommen wird und zu temporären Erkenntnissen führt, die nur unbefriedigende Ergebnisse liefern, ändert sich dieses grundlegend durch die Erfindung.

Anders als die Verfahren aus dem Stand der Technik arbeitet die Erfindung nicht mit einer einzelnen, möglichst steilen Flanke eines akustischen Ereignisses, die man dann bisher nach verschiedenen Reflexionen aus dem Gemisch der insgesamt zurückkehrenden Signalmuster versucht, zu erkennen. Stattdessen wird mit einem Frequenzspektrum gearbeitet, dass sich darüber hinaus auch noch zeitlich ändert. Das sowohl nach Zeitablauf als auch nach Frequenz vorgegebene Signalmuster wird in das Bohrloch abgestrahlt und - insoweit wie der Stand der Technik - an den verschiedenen Rohrverbindungen reflektiert, gegebenenfalls auch mehrfach.

Die Messeinrichtung in der erfindungsgemäßen Vorrichtung an der Erdoberfläche wird also ein sehr komplexes und auf den ersten Eindruck hin auch sehr "wirres", kompliziertes Paket an Signalmustern wieder aufnehmen. Ein Benutzer wäre manuell anhand eines aufgezeichneten Protokolls niemals in der Lage, das aufgenommene, wiederum zeitlich veränderliche Frequenzspektren zeigende Protokoll zu interpretieren.

Die elektronische Analyseeinrichtung ist jedoch in der Lage, aus der ihr bekannten Zusammensetzung des abgestrahlten Signalmusters in der aufgenommenen Zusammensetzung zu ermitteln, welche Reflexionen tatsächlich stattgefunden haben, da die einzelnen Signalmuster ja in ihrer Gesamtheit die gleichen Reflexionsereignisse vorgefunden haben und sich eine mögliche frequenzabhängig unterschiedliche Reflexionseigenschaft der verschiedenen Rohrverbindungsstellen mathematisch korrigieren lässt.

Dadurch, dass ein Signalmuster jedes einzelne Reflexionsereignis durchläuft, kann anders als im Stand der Technik wesentlich präziser eine entsprechende Ermittlung erfolgen. Die bisher störenden Mehrfachreflexionen stören jetzt nicht mehr, da auch sie jeweils von einem gesamten Signalmuster durchlaufen werden und aufgrund der zeitlichen Veränderung der einzelnen Frequenzen des abgestrahlten Signals sogar eindeutig identifiziert werden können.

Diese hoch genauen Möglichkeiten haben zur Folge, dass Schwingungsereignisse, die mit dem ausgestrahlten Signalmuster nicht korrelieren, weil sie nämlich nicht auf einer Reflexion dieser Signalmuster beruhen, sondern auf bohrlocheigenen Schwingungsereignissen, ebenfalls sauber identifiziert werden können. Sie stören also die Auswertung nicht mehr und können als bohrlocheigene Arbeitsereignisse identifiziert werden, sogar dann, wenn die vom Arbeitsereignis verursachte Signalamplitude, größer ist, als die des in der Vorrichtung erzeugten Signalmusters für die Messung.

Dies hat den in der Praxis erheblichen Vorteil zur Folge, dass die Messungen mit dem erfindungsgemäßen Verfahren und der erfindungsgemäßen Vorrichtung durchgeführt werden können, ohne den Förderbetrieb unterbrechen zu müssen. Die Förderung von beispielsweise Rohöl aus dem Bohrloch kann also mit laufender Pumpe fortgesetzt werden. Die bei diesem Fördervorgang selbstverständlich entstehenden Pumpgeräusche, Geräusche beweglicher Teile und Gelenke und auch die von der strömenden Flüssigkeit selbst hervorgerufenen Geräusche stören die Ermittlung der Lage der Spiegelteufe nicht, da es sich durchweg um Geräusche handelt, die Schwingungsereignisse bilden, die gerade nicht mit den Signalmustern korrelieren, die von der Erdoberfläche zu den Messzwecken in das Bohrloch herabgeschickt werden.

Sie lassen sich also bei der Bestimmung der Lage der Spiegelteufe einwandfrei ausscheiden.

Diese Bohrloch eigenen Arbeitsereignisse können also bei der Ermittlung der exakten Lage der Spiegelteufe herausgefiltert werden, sodass sich diese Ermittlung auf die tatsächlich interessierenden Schwingungsereignisse konzentrieren kann.

Dabei ist es von besonderen Vorteil, wenn die erfolgende Analyse in der elektronischen Analyseeinheit nun diese aufgenommenen und herausgefilterten zusätzlichen Schwingungsereignisse ebenfalls mit etwa im Speicher vorgesehenen anderen Werten abgleichen kann, beispielsweise mit typischen Schwingungsereignissen, die von einer Fördereinrichtung im Bohrloch abgegeben werden und etwa bei einer früheren Messung aufgenommen wurden. Diese typischen und als bekannt zu erkennenden Schwingungsereignisse sind dann als problemlos und ordnungsgemäß zu identifizieren und können ignoriert werden.

In einer besonders bevorzugten Ausführungsform ist es darüber hinaus möglich, gleichzeitig eine Überwachung der starren und beweglichen Prozessanlagenkomponenten der Förderstellen vorzunehmen. Diese bevorzugte Ausführungsform setzt neben die bisher übliche Erfassung von bereits eingetretenen elektrischen oder mechanischen Störungen an den Fördereinrichtungen neu die Kenntnis von sich einschleichenden Abweichungen vom Normalzustand. Dadurch wird die Möglichkeit einer zielgerichteten präventiven Wartung und Instandhaltung geschaffen.

Zu berücksichtigen ist ja, dass an den Bohrlöchern im Laufe der Betriebszeit auch Schäden und Beschädigungen auftreten können, etwa an den Fördereinrichtungen. Ein frühzeitiges Erkennen derartiger Schäden, Beschädigungen oder anderer Fehler ist vom großen Wert. So führt ein Schaden etwa durch einen Gestängebruch zu einem sehr teuren Fang- und Reparaturvorgang, der eine längere Ausfallzeit für das gesamte Bohrloch bedeutet. Wird jedoch ein entsprechender Schaden frühzeitig erkannt, so kann vor Eintritt des Schadens ein deutlich weniger kostspieliger Austausch oder eine Reparatur des Gestänges vorgenommen werden.

Ein derartiger Schaden deutet sich häufig bereits durch Schwingungsereignisse an, die als solche nicht signifikant sind und von zufällig am Bohrloch anwesenden Personen auch nicht bemerkt werden, sich jedoch durch Änderungen der Schwingungsverhältnisse und eine Überwachung dieser Änderungen andeuten, etwa durch das Auftreten von zusätzlichen Schwingungen, die bei vorherigen Messungen nicht beobachtet wurden.

Die bevorzugte Ausführungsform macht nun von der Möglichkeit Gebrauch, die bereits oben erwähnten Bohrloch eigenen Schwingungsereignisse näher zu betrachten, die nicht auf die für die Ermittlung der Lage der Spiegelteufe ausgestrahlten und reflektierten Signalmuster zurückgehen.

Wie oben schon erwähnt, kann in der Analyseeinheit ein Vergleich der nicht zu den ausgesandten Signalmusters korrelierenden Schwingungsereignisse mit anderen in dem Speicher vorgesehenen Werten erfolgen, beispielsweise mit typischen Schwingungsereignissen, die ordnungsgemäßen Arbeitsereignissen im Bohrloch zugeordnet werden können.

Treten jedoch Schwingungsereignisse auf, die nicht zugeordnet werden können oder vielleicht auch einem im Speicher hinterlegtem Schwingungsereignis zugeordnet werden können, das auf bestimmte Fehler hindeutet, kann der Benutzer entsprechend informiert werden und kann diesen unbekannten und möglicherweise auf eine Fehlfunktion der Fördereinrichtung, des Bohrgestänges oder anderer Elemente hindeutenden, neben der eigentlichen Messung aufgenommenen Schwingungsereignis nachgehen.

Dabei kann dem Benutzer auch gleich ein Hinweis darauf gegeben werden, ob ein bestimmter und welcher Fehler zu vermuten oder dringend nachzuprüfen ist, oder obein ganz unbekanntes und für die Analyse einheit nicht einzuschätzendes Schwingungsereignis beobachtet wird.

Das Verfahren und/oder die Vorrichtung erlauben neben der automatischen Bestimmung der Lage der Spiegelteufe nun auch gleichzeitig eine Überwachung der bewegten Prozesskomponenten auf unspezifische Schwingungsereignisse. So lassen sich beispielsweise Gestängeanomalitäten ebenso wie die Laufeigenschaften von Kreiseltiefpumpen oder Motoren und Getrieben der obertägigen Antriebseinheiten überwachen. Bereits bei einfachen Ausführungsformen können in jedem Messzyklus 16 oder mehr unterschiedliche Störungsszenarien einzeln oder mathematisch untereinander verknüpft bewertet und nachverfolgt werden.

Für noch erweiterte Prozessanlagenüberwachungen kann auch ein zusätzlicher Aufnehmer oder eine Aufnehmergruppe an die Analyseeinheit angeschlossen werden.

Erfindungsgemäß kann in der bevorzugten Ausführungsform nun mit nur einem Sensor- und Analysesystem sowohl die Spiegelteufe gemessen als auch gleichzeitig eine Überwachung der Förderstellen auf diese Schäden und Beschädigungen vorgenommen werden.

Die gleichzeitige Beobachtungsmöglichkeit von einerseits möglichen Fehlern und andererseits unabhängig von jeder Fehlerbetrachtung der Lage der Spiegelteufe gibt dem Betreiber des Bohrloches erhebliche Vorteile. So kann er zu deutlich geringeren Kosten eine wesentlich häufigere Prüfung der Spiegelteufe vornehmen, da mit der Ermittlung der Lage der Spiegelteufe auch zugleich wesentliche Teile von Wartungs- und Fehlerbeobachtungsaufgaben erfüllt werden können, ohne dass dabei Mehrkosten für den Einsatz von Fachleuten oder Geräten anfallen.

Möglich wird auch eine Überprüfung einer etwaigen Korrelation zwischen einem vielleicht beobachteten Fehler und der Lage der Spiegelteufe bei der Beobachtung des Fehlers. Es entsteht die Möglichkeit von Langzeitbeobachtungen in Abständen und die Aufzeichnung der jeweils beobachteten Schwingungsereignisse, sodass auch im Nachhinein noch festgestellt werden kann, ob ein möglicherweise aufgetretener Fehler sich bei der vorhergehenden Messung bereits angedeutete hatte.

Von besonderem Vorteil ist es, dass anders als bei herkömmlichen Anlagen durch die deutlich vereinfachte konstruktive Ausführung gerade ein stationärer Einsatz an einer Förderstelle sinnvoll wird. Die Anlage wird dann stationär angeordnet und überwacht das Bohrloch regelmäßig oder sogar permanent beziehungsweise kontinuierlich.

Jedoch gibt es auch Ausführungsformen, die nach wie vor einen mobilen Einsatz ermöglichen.

Das Verfahren arbeitet so, dass ein Signalgenerator niederfrequente, elektrische Signale erzeugt. Diese Signale werden mittels eines Schwingungswandlers in einem Messkopf in Signalmuster umgewandelt. Diese Signalmuster können sich als Druckwellen über die gasförmigen Medien im Bohrloch, die sich zwischen zwei ineinander laufenden Rohren befinden, ausbreiten.

Es entstehen wie auch bei Messungen nach dem Stand der Technik an den Rohrverbindungsstellen der Rohrleitungen jeweils zurücklaufende Wellen. Auch hier werden die ausgesendeten Wellenformen an der Grenzschicht zwischen gasförmigen und festen beziehungsweise flüssigen Medien, die sich zwischen den beiden Rohren befinden können, reflektiert, also auch an der Spiegelteufe.

Die zurücklaufenden Wellen und die Reflexionen der Grenzschicht zwischen den gasförmigen und den flüssigen Medien werden in dem Messkopf durch einen elektronischen Aufnehmer empfangen und dann an die Analyseeinheit weitergeleitet.

Die Analyseeinheit berechnet wiederum aus dem Ausgangssignal und den empfangenen Rücksignalen durch Korrelation im Frequenz- und Zeitbereich die Anzahl der Rohrverbindungen und den Abstand zwischen dem Signalgenerator und der Trennschicht zwischen den flüssigen und den gasförmigen Medien.

Anders als bisher, wird jedoch zur Gewinnung des Messsignals keine Explosion oder Implosion mit einer großen, steilen Amplitude mit einer Gaskanone erzeugt. Stattdessen wird erfindungsgemäß mit möglichst kleinen Signalamplituden gearbeitet, die über einen bekannten, zeitkontinuierlichen Verlauf verfügen.

Dabei wird bevorzugt auf eine Konzeption zurückgegriffen, die in der DE 198 46 870 C1 mathematisch beschrieben wird, wobei anders als in dieser Druckschrift erwähnt mit niederfrequenten und nicht mit hochfrequenten Signalen gearbeitet wird. Für den Fachmann überraschend stellte sich heraus, dass dieses an sich für ganz andere Einsatzgebiete etwa in der Radartechnik im Hochfrequenzbereich von etwa 100 MHz bis 10 GHz gedachte Verfahren gerade bei den erfindungsgemäßen Einsatzzwecken im Bohrloch geeignet ist, wenn ebenfalls anders als in dieser Druckschrift vorgesehen nicht mit hochfrequenten, sondern mit niederfrequenten Signalen gearbeitet wird, die etwa im Frequenzbereich von Schallwellen liegen.

Besonders bevorzugt ist es also, wenn das Verfahren mit Frequenzen zwischen 5 Hz und 1000 Hz, bevorzugt zwischen 5 Hz und 100 Hz, durchgeführt wird.

Bei Versuchen haben sich diese Frequenzbereiche als besonders geeignet herausgestellt.

Das Verfahren hat darüber hinaus den großen Vorzug, dass während der Messung kein Austausch des Mediums in der Messeinrichtung mit der Umgebungsluft stattfindet, da der Messkopf ein geschlossenes System ist.

Dies ist ein wesentlicher Vorteil etwa gegenüber dem bekannten Verfahren, bei dem über eine Implosion ein Überdruck in der Atmosphäre im Bohrloch ausgenutzt wird, was allerdings dazu führt, dass Teile des Gases im Bohrloch in die Umgebungsluft austreten, was aus sicherheitstechnischen und auch aus ökologischen Gründen auf Bedenken stoßen kann.

Mit der Erfindung wird es möglich, sowohl bei der Messung der Lage der Spiegelteufe als auch bei der Überwachung der Prozessanlagen zu einem zeitkontinuierlichen und automatisch arbeitenden Überwachungsmodus zu gelangen. Es entsteht ein innovatives, voll elektronisches Kombinationsmesssystem, das für den stationären und mobilen Einsatz an Erdöl- und Erdgasförderstellen geeignet ist und als Anlage auch in Serie gefertigt werden kann. Das Verfahren und die Vorrichtung ermöglichen einen sehr wirtschaftlichen Einsatz auch bei ungünstigen äußeren Bedingungen.

Die Erholungsrate der Messvorgänge zur Bestimmung der Lage der Spiegelteufe ist praktisch frei wählbar und kann je nach äußeren Anforderungen in einem Zeitbereich zwischen einigen wenigen Sekunden bis hin zu Monatsabständen frei gewählt werden.

Besonders bevorzugt ist vorgesehen, dass die Analyseeinheit ein der jeweils gemessenen Spiegelteufe entsprechendes elektrisches Signal generiert. Der Wert dieses elektrischen Signals wird ständig mit dem in der Analyseeinheit vermerkten Sollwert der Spiegelteufe und mit früheren Messungen verglichen. Steigt oder sinkt der Wert für die gemessene Spiegelteufe, wird automatisch die Leistung der Fördereinrichtung, also insbesondere der Pumpe an dem Bohrloch, automatisch solange verändert, bis das gemessene Signal für die Spiegelteufe wieder einen vorgegebenen Sollwert erreicht hat.

Es wird also durch eine Steuerung der Pumpleistung ein Regelkreislauf aufgebaut. Bei stationären Anlagen ist es also möglich, ohne Anwesenheit von Fachpersonal eine automatische Steuerung des Bohrlochbetriebes vorzunehmen.

Ein derartiger Regelkreislauf ist mit Verfahren und Vorrichtungen aus dem Stand der Technik nicht ohne Weiteres möglich. Diese können einen Wert der Lage der Spiegelteufe praktisch nur händisch am Bohrloch ermitteln lassen, der dann nach Prüfung und manuellem Vergleich mit anderen Werten von anwesenden Benutzern zur entsprechenden Korrektur der Steuerung von Fördereinrichtungen genutzt werden kann. Erfindungsgemäß ist jedoch zum Einen die Bestimmung der Lage der Spiegelteufe sehr präzise und auch sicher und damit verlässlich, zum Anderen ist sie auch vollautomatisch und es wird kein Benutzer benötigt, der die ermittelten Messwerte prüft und verwendet. Die sich ergebende Regelung im Kreislauf ist also nicht nur sehr zuverlässig und genau, sondern darüber hinaus auch noch ausgesprochen unaufwändig und damit kostengünstig.

Eine bevorzugte Ausführungsform der Vorrichtung zeichnet sich dadurch aus, dass eine Fernübertragungseinrichtung vorgesehen ist, die eine Fernübertragung aufgenommener und/oder ausgewerteter Ergebnisse vornimmt.

Bei einer derartigen Ausführungsform können die kontinuierlich erfassten Daten der Lagebestimmung der Spiegelteufe als Abgleich eines Lagerstättenmodels eines kompletten Erdöl- oder Erdgasfeldes herangezogen werden und damit zur Optimierung der Steuerung der gesamten Anlage im Bereich einer Lagerstätte dienen.

Die Informationen der einzelnen Überwachungen der jeweiligen Prozesskomponenten können in dieser Ausführungsform beispielsweise zu einer Leitwarte übertragen werden. Möglich ist es auch, die einzelnen Analyseeinheiten, Speichereinheiten und Anzeigeeinheiten vor Ort zu einem von der Leitwarte gesteuerten Netzwerk zu vernetzen. Es können dann jederzeit über einen Remotezugriff Parameterveränderungen vorgenommen, die aktuellen Messwerte der angeschlossenen Analyseeinheiten vor Ort visualisiert und das Verhalten der Spiegelteufe der einzelnen Förderbereiche beispielsweise dreidimensional dargestellt werden.

Besonders bevorzugt ist es, wenn die schwingungsabgebende Einrichtung einen Dauermagneten und eine Erregerspule an einer schwingenden Membran aufweist.

Dies stellt eine Umkehrung des Aufbaus eines klassischen Schwingungserzeugers dar, wie man ihn beispielsweise aus üblichen Lautsprechern kennt. Mit einer derartigen Kombination aus Dauermagnet und Balg als schwingende Einheit lässt sich ein robuster und gegen Säuren und Laugen resistenter Schwingungsgeber aufbauen. Der Aufbau erlaubt den Betrieb sowohl als Analogschwinger (also dem Kurvenverlauf des elektrischen Signals genau folgen) als auch als Digitalschwinger, der mit der Erregerfrequenz wischen zwei Endpunkten ohne Zwischenstellungen schwingt.

Bei Versuchen hat sich eine besonders elegante Möglichkeit für den Aufbau der erfindungsgemäßen Vorrichtung ergeben. Diese zeichnet sich dadurch aus, dass die schwingungsabgebende Einrichtung und die Messeinrichtung zumindest teilweise auf identische Elemente zurückgreifen.

Es ist nämlich möglich, die schwingungsabgebende Einrichtung, die letztlich ähnlich wie eine Art Lautsprecher aufgebaut ist, auch mit der Messeinrichtung gemeinsam aufzubauen. Diese Messeinrichtung benötigt ähnliche Elemente, um Druckschwankungen aufnehmen zu können, arbeitet letztendlich also im Grundsatz wie ein Art Mikrofon oder Drucksensor.

Durch die Verwendung identischer Elemente (insbesondere der identischen Membran) lässt sich ein separater und sehr kostenintensiver Sensor vermeiden, da ja nur bestimmte Eigenschaften dieses Drucksensors benötigt werden.

Als verwendbar haben sich überraschend Einrichtungen herausgestellt, die in anderem Zusammenhang etwa für Sirenentongeneratoren eingesetzt werden. Derartige Generatoren zum Erzeugen eines Sirenentons besitzen Abstrahlleistungen und Eigenschaften, wie sie auch Balglautsprecher besitzen. Insbesondere besitzen sie auch eine entsprechende Membran.

Die entsprechenden Elemente der Sirenentongeneratoren werden eingesetzt und im Bereich der Membran wird mittels Bohrungen erreicht, dass im eingebauten Zustand ein interner Druckausgleich stattfinden kann, um die möglichen Überdrücke im Bohrloch von vornherein zu berücksichtigen, die für die Aufnahme der Schallschwankungen uninteressant sind und stattdessen lediglich die Membran belasten würden.

Diese Bohrung ermöglicht daher erst den Einsatz als hochempfindlicher Druckaufnehmer.

Wie sich bei Tests gezeigt hat, kann durch die gleichzeitige Verwendung der Membran als Element des Signalgebers bzw. der schwingungsgebenden Einrichtung und der Messeinrichtung eine erheblich größere Empfindlichkeit erreicht werden. Die Form und die Anzahl der feststellbaren Echos nimmt deutlich zu.

Um diese Vorteile nutzen zu können, wird ein elektronischer Umschalter zwischengeschaltet. Die Umschalter müssen den Betrieb zwischen der Signalerzeugung und der Signalaufnahme trennen und auch die entsprechende Signalweitergabe steuern.

Im Folgenden wird anhand der Zeichnung ein Ausführungsbeispiel der Erfindung näher erläutert. Es zeigen:
- **Figur 1**: eine schematische Darstellung eines Bohrloches mit einer erfindungsgemäßen Vorrichtung;
- **Figur 2**: eine vergrößerte Darstellung eines Messkopfes der erfindungs- gemäßen Vorrichtung;
- **Figur 3**: eine schematische Darstellung der Signalwiedergabe bei einer ersten Ausführungsform; und
- **Figur 4**: eine schematische Darstellung der Signalwiedergabe bei einer zweiten Ausführungsform.

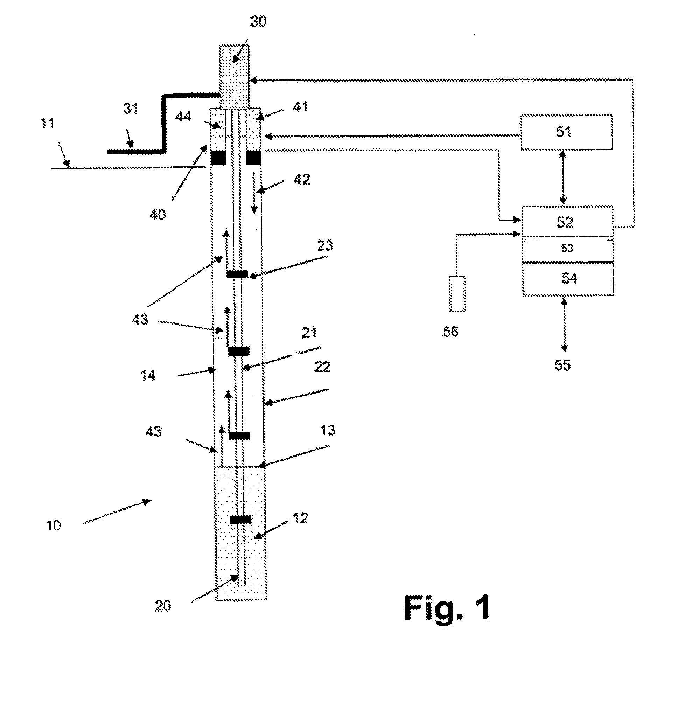

In der **Figur 1** ist ein Bohrloch 10 dargestellt. Das Bohrloch 10 reicht von der Erdoberfläche 11 in die Tiefe bis zu einer Lagerstätte für beispielsweise Erdöl beziehungsweise Rohöl. Das Rohöl 12 bildet zusammen mit weiteren Flüssigkeiten ein Gemisch, dass durch eine Grenzschicht 13 von den sich darüber bildenden verschiedenen Gasen und gasförmigen Medien 14 getrennt ist. Diese Gase sind unter anderem Stickstoff, Argon und andere Bestandteile der Atmosphäre und außerdem Methan und weitere sich oberhalb des Rohöls bildende Gase. Die Zusammensetzung schwankt im Laufe der Zeit und auch mit der Tiefe des Bohrlochs 10.

Die genaue Lage der Grenzschicht 13 zwischen den flüssigen Stoffen mit dem Rohöl 12 und den gasförmigen Medien 14 bildet eine Spiegelteufe. Die genaue Lage dieser Spiegelteufe 13 beziehungsweise der Grenzschicht schwankt im Laufe der Zeit abhängig davon, mit welcher Geschwindigkeit das Rohöl 12 und die weiteren Flüssigkeiten in das Bohrloch 10 von der Seite und von unten eintreten.

Um das Rohöl 12 aus dem Bohrloch 10 an die Erdoberfläche 11 zu fördern, ist eine Rohrleitung vorgesehen. Diese vertikal im Bohrloch 10 verlaufende Rohrleitung 20 besteht aus einem Innenrohr 21 und einem das Innenrohr konzentrisch umgebenden und gleichzeitig die Rohrwandung bildenden Außenrohr 22. Durch das Innenrohr 21 wird das Rohöl 12 nach oben gefördert, während sich in dem Ringraum zwischen dem Innenrohr 21 und dem Außenrohr 22 der Druck ausgleicht.

Sowohl das Innenrohr 21 als auch das Außenrohr 22 der Rohrleitung 20 bestehen aus einer Vielzahl von einzelnen Rohrabschnitten, die nacheinander von der Erdoberfläche 11 aus in das Bohrloch 10 herabgelassen und dabei sukzessive miteinander über Rohrverbindungen 23 verbunden werden. Diese Rohrverbindungen 23 sind nicht stoßfrei, sondern bilden Muffen, die in der schematischen Darstellung in Figur 1 verstärkt dargestellt sind.

Oberhalb der Erdoberfläche 11 ist noch rein schematisch eine Pumpe 30 dargestellt, die die Förderung vornimmt. Teile der Fördereinrichtung befinden sich natürlich auch (nicht dargestellt) in tieferen Bereichen des Bohrloches 10.

Das an die Erdoberfläche 11 mittels der Pumpe 30 geförderte Fluid beziehungsweise Rohöl 12 wird über eine Rohrleitung 31 zur weiteren Verwendung abtransportiert.

Eine Vorrichtung 40 im Bereich der Erdoberfläche 11 am Kopf des Bohrloches 10 besitzt unter anderem eine Schwingungsabgabeeinrichtung 41. Diese gibt in Richtung 42 ein noch im Folgenden zu beschreibendes Schwingungssignal nach unten in das Bohrloch 10 ab. Das Schwingungssignal beziehungsweise Signalmuster 42 in Form von Druckwellen wird an der Grenzschicht 13 in der Höhe der Spiegelteufe und außerdem an allen Rohrverbindungen 23 aufwärts reflektiert, so dass hier eine Vielzahl von rücklaufenden Signalen beziehungsweise Signalmustern 43 entsteht.

Diese rücklaufenden Signalmuster 43 werden in einer Messeinrichtung 44 in der Vorrichtung 40 aufgefangen. Diese Messeinrichtung 44 ist beispielsweise ein Druckaufnehmer.

Im rechten Bereich der Darstellung in der Figur 1 ist angedeutet, dass die Erzeugung der Signalmuster 42 in der schwingungsabgebenden Einrichtung 43 durch einen elektrischen Signalgenerator 51 generiert wird.

Die in der Messeinrichtung 44 aufgenommenen rücklaufenden Signalmuster 43 werden in einer elektronischen Analyseeinheit 52 ausgewertet. Die entsprechenden Ergebnisse der elektronischen Analyseeinheit 52 werden in einer Speichereinheit 53 gespeichert und in der dargestellten Ausführungsform in einer Anzeigeeinheit 54 visualisiert. Die Ergebnisse können auch, wie dargestellt, über eine Fernverbindung 55, etwa eine Funkverbindung oder mittels eines local area networks oder eines wide area networks weiter übermittelt werden, um eine Auswertung mehrerer derartiger Vorrichtungen 40 an mehreren Bohrlöchern 10 gleichzeitig zu ermöglichen. Die Fernverbindung 55 kann auch eine Fernsteuerung enthalten, die Abfragen oder auch einen Eingriff in die Steuerung ermöglicht.

Angedeutet ist ferner ein externer Signalaufnehmer 56, der auch weitere Signale aufnehmen kann und der elektronischen Analyseeinheit 52 zuführt. Die Daten aus der elektronischen Analyseeinheit 52, die aus dem externen Signalaufnehmer 56 und insbesondere aus der Messeinrichtung 44 stammen, können zur Regelung der Pumpe 30 eingesetzt werden und auf diese Weise die Fördergeschwindigkeit für das Rohöl 12 aus dem Bohrloch 10 optimieren.

Der elektrische Signalgenerator 51 erzeugt niederfrequente, elektrische Signale. Diese Signale werden der schwingungsabgebenden Einrichtung 41 in der Vorrichtung 40 am oberen Ende des Bohrloches 10 zugeführt. Dort werden sie mittels eines Schwingungswandlers (nicht dargestellt) in Signalmuster 42 umgewandelt. Diese Signalmuster 42 werden als Druckwellen nach unten in das Bohrloch 10 abgegeben und können sich über die gasförmigen Medien 14 in dem Bohrloch 10 ausbreiten, die sich in dem Ringraum zwischen dem Innenrohr 21 und dem Außenrohr 22 befinden.

An den Rohrverbindungsstellen 23 der einzelnen Rohrabschnitte der Rohrleistung 20 entstehen wie erwähnt nun die rücklaufenden Signale beziehungsweise Signalmuster 43. Die ausgesendeten Wellenformen werden außerdem an der Grenzschicht 13 zwischen dem gasförmigen Medien 14 und den Fluiden beziehungsweise festen und flüssigen Medien mit Rohöl 12 in unterem Bereich des Bohrloches 10 reflektiert.

Die rücklaufenden Signalmuster 43 werden von der Messeinrichtung 44 in der Vorrichtung 40 empfangen und in elektrische Signale umgewandelt und an die elektronische Analyseeinheit 52 weitergeleitet. Diese elektronische Analyseeinheit 52 berechnet aus dem Ausgangssignal und den empfangenen rücklaufenden Signalmustern 43 durch Korrelation im Frequenz- und Zeitbereich die Anzahl der Rohrverbindungen 23 oberhalb der Spiegelteufe mit der Grenzschicht 13 und daraus wiederum den Abstand zwischen der schwingungserzeugenden Einrichtung 41 und der Grenzschicht 13 zwischen den Medien 12 und 14.

Die Länge der einzelnen Rohrabschnitte 23 ist bekannt beziehungsweise wird gemessen und ist im Gegensatz zur Zusammensetzung des gasförmigen Mediums 14 mit der Zeit konstant. Diese Länge der Rohrabschnitte kann in der Speichereinheit 53 hinterlegt sein und wird dann von der elektronischen Analyseeinheit 52 ausgewertet.

Der elektronische Signalgenerator 51 generiert anders als im Stand der Technik sehr kleine Signalamplituden. Diese Signale besitzen einen vorgegebenen, zeitkontinuierlichen Verlauf. Der elektronische Signalgenerator 51 kann im Grundsatz einer Anordnung entsprechen, wie sie in der DE 198 46 870 C1 skizziert ist. Allerdings wird anders als bei dieser bekannten Anordnung mit niederfrequenten Signalen gearbeitet.

Große oder steile Amplituden sind nicht erforderlich.

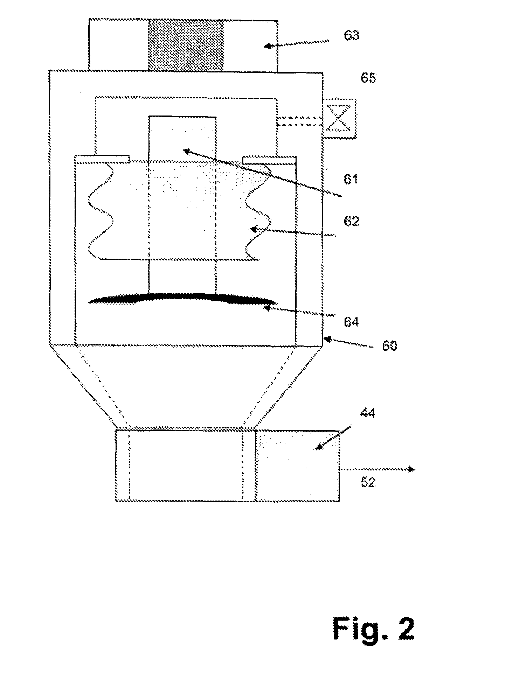

Die Vorrichtung 40 mit der schwingungsabgebenden Einrichtung 41 und der Messeinrichtung 44 ist ein geschlossenes System, das in einer bevorzugten Ausführungsform in der Figur 2 noch näher behandelt werden wird. Daher wird während und auch zwischen verschiedenen Messungen der Spiegelteufe 13 kein Anlagenmedium an die Umgebungsluft abgegeben.

Die elektronische Analyseeinheit 52 generiert jeweils abhängig von den ihr zugeführten Messwerten der Messeinrichtung 44 ein elektrisches Signal, das der jeweiligen Spiegelteufe 13 entspricht. Die Größe dieses elektrischen Signals wird in einer bevorzugten Ausführungsform ständig mit dem in der elektronischen Analyseeinheit 52 beziehungsweise der angeschlossenen Speichereinheit 53 bekannten und eingestellten Sollwert der Spiegelteufe verglichen. Steigt oder sinkt nun der Wert der gemessenen Spiegelteufe 13, wird die Leistung der Pumpe 30 über ein Steuersignal automatisch so verändert, bis das der Spiegelteufe 13 entsprechende Signal wieder den gewünschten Sollwert erreicht hat.

Die in der Analyseeinheit 52 errechneten aktuellen Werte der Spiegelteufe 13 aus den Messwerten der Messeinrichtung 44 werden in der Speichereinheit 53 abgespeichert und können bei Bedarf über die Datenverbindung 55 an übergeordnete Prozessüberwachungs- und Steuersysteme übertragen werden.

Aus den Einzelmesswerten der an dieses übergeordnete System angeschlossenen Förderstellen mit ihren jeweiligen Bohrlöchern 10 lässt sich automatisch ein zeitnahes, dreidimensionales Abbild der Spiegelteufe 13 der jeweiligen Lagerstätte mit ihrer Vielzahl von Bohrlöchern 10 erstellen. Über den Fernzugriff 55 auf die einzelnen Analyseeinheiten 52 können zur Optimierung der Förderrate der gesamten Lagerstätte die einzelnen gespeicherten Sollwerte der Spiegelteufe 13 für die jeweiligen Bohrlöcher jederzeit verstellt werden. Der Sollwert kann also separat für jedes Bohrloch 10 abhängig von übergeordneten neuen Erkenntnissen geändert werden.

Der Messvorgang der Spiegelteufe 13 in einem bestimmten Bohrloch 10 kann in beliebigen, zeitlichen Abständen praktisch ohne eine Begrenzung der Häufigkeit der Messvorgänge durchgeführt werden.

Neben den reflektierten und zurücklaufenden Schallsignalen 43 nimmt die Messeinrichtung 44 auch Schwingungsereignisse der Prozessanlageneinrichtungen der Förderstelle am Bohrloch 10 auf. Diese Schwingungsereignisse geben über den technischen Zustand der beweglichen Teile der Fördereinrichtungen Auskunft, beispielsweise über die Pumpe 30 und ihre Bestandteile oder auch über bewegliche Teile der Gestänge der Rohrleitung 20. Die aufgenommenen Schwingungsereignisse werden kontinuierlich in der Analyseeinheit 52 vor Ort bewertet und auf signifikante Veränderungen im Zeit- und Frequenzbereich sowie der Phasenlage untersucht. Das analytische Verfahren kann Standardmethoden der automatischen Maschinenüberwachung (so genannte CMS) enthalten.

Die Analyseeinheit 52 bietet für die Maschinenüberwachung den Anschluss des oben erwähnten externen, zusätzlichen Signalaufnehmer 56 oder auch einer Signalaufnehmergruppe. Mit diesem externen Signalaufnehmer 56 ist innerhalb der Prozessanlage auch eine Überwachung von solchen Schwingungsereignissen möglich, die nicht direkt über die Anlagenkomponenten oder die Prozessmedien an die Messeinrichtung 44 übertragen werden.

Sowohl spontane als auch sich einschleichende Systemveränderungen werden erkannt, in der Speichereinheit 53 gespeichert, mit der Fernübertragungseinrichtung 55 übertragen und/oder visualisiert.

Eine gleichzeitige Messung der Lage der Spiegelteufe 13 und der Maschineneigenschaften führt zu erheblichen Vorteilen, da auch die beiden Werte miteinander in Verbindung gebracht werden können und somit für die Auswertung erhebliche synergistische Effekte und zusätzliche Erkenntnisse ermöglichen. So kann beispielsweise die Lage der Spiegelteufe 13 bei der Interpretation der Schwingungsereignisse aus dem Bohrloch 10 berücksichtigt werden.

Eine besonders geeignete Ausführungsform zur gleichzeitigen Durchführung der beiden Messverfahren realisiert dies mit nur einem Signalgeber, also nur einer schwingungsabgebenden Einrichtung 41, und nur einem Signalempfänger, also nur einer Messeinrichtung 44. Die Ausführungsform ist in der **Figur 2** dargestellt und zeigt einen hierfür geeigneten Balglautsprecher.

In einem Druckgehäuse 60 wird ein Stabmagnet beziehungsweise Eisenkern 61 über einen elastischen Balg 62 mittig gelagert. Auf der Außenseite des Druckgehäuses 60 ist ein Impulsmagnet 63 montiert, der die von dem elektronischen Signalgenerator 51 erzeugten elektrischen Signale auf den Stabmagneten beziehungsweise Eisenkern 61 überträgt. Die elektrischen Signale des elektronischen Signalgenerators 51 werden auf diese Weise in Schwingungen des Eisenkerns 61 umgesetzt. Mit dem Eisenkern 61 ist eine schematisch dargestellte Membran 64 verbunden, die also mit dem Eisenkern 61 schwingt.

Die Schwingungen sind wie oben erwähnt niederfrequent. Sie liegen insbesondere in einer Größenordnung zwischen 5 Hz und 1000 Hz, bevorzugt zwischen 5 Hz und 100 Hz. Die Schwingungen der Membran 64 werden auf das unterhalb der Membran 64 liegende gasförmige Medium übertragen, das seinerseits mit dem gasförmigen Medium 14 in dem Ringraum zwischen dem Innenrohr 21 und dem Außenrohr 22 der Rohrleitung 20 im Bohrloch 10 in Verbindung steht beziehungsweise dessen obersten Bereich bilden.

Die elektrischen Signale des Signalgenerators 51 werden also als Schallsignale beziehungsweise Druckwellen oder Signalmuster 42 auf das gasförmige Medium 14 in dem Bohrloch 10 zwischen Innenrohr 21 und Außenrohr 22 übertragen.

Die Messeinrichtung 44 mit dem Signalempfänger befindet sich innerhalb der Vorrichtung 40 in einem Aufschraubgehäuse. Dies ist in der Figur 2 nur schematisch angedeutet. Die von der Messeinrichtung 44 empfangenen Daten werden an die elektronische Analyseeinheit 52 weitergegeben, was hier wiederum durch einen Pfeil symbolisiert wird.

Schließlich ist noch ein Absperrhahn 65 vorgesehen, der eine Einstellung des Druckes in dem Druckgehäuse 60 in dem Bereich oberhalb der Membran 64 erlaubt.

Der gesamte Aufbau ist so ausgelegt, dass ein Einsatz bei Tests bis zu Rohrinnendrücken von 300 bar möglich war.

Der Vorteil des dargestellten und in der Figur 2 schematisch angedeuteten Aufbaus besteht darin, dass keine Kabeldurchführungen in das Druckgehäuse 60 benötigt werden. Das Gehäuse kann darüber hinaus relativ klein ausgelegt werden.

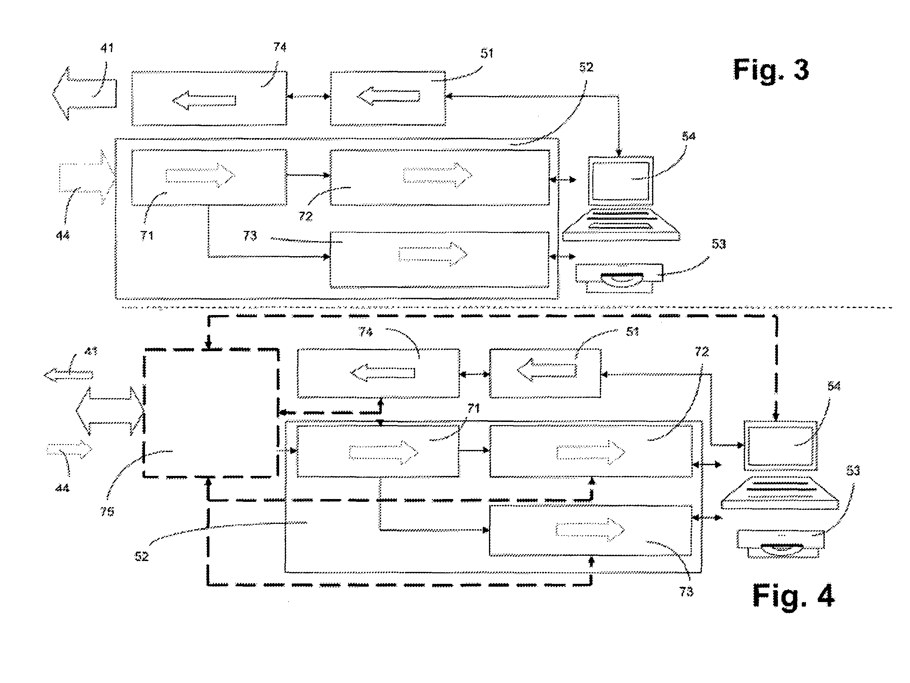

In der **Figur 3** wird eine schematische Darstellung der Form der Signalübermittlung dargestellt, die etwa bei einer Verwendung eines Balglautsprechers und eines Messkopfes aus der Figur 2 eingesetzt wird.

Man sieht eine Messeinrichtung 44, die als Signalaufnehmer arbeitet. Sie gibt ihre Signale weiter an die elektronische Analyseeinheit 52. Diese weist einen Niederfrequenzverstärker 71 auf, der das Signal der Messeinrichtung 44 entsprechend verstärkt und an eine Einheit 72 für eine Geräuschmusteranalyse und an eine Einheit 73 für eine Spiegelteufenermittlung weitergibt. Danach gehen die Daten der Einheiten 72 und 73 dann an eine Speichereinheit 53 und an eine Anzeigeeinheit 54 sowie etwaige weitere Datenverarbeitungselemente.

Von dort oder direkt aus der elektronischen Analyseeinheit 52 werden die Daten an den elektronischen Signalgenerator 51 weitergeleitet, der sie wiederum über einen zweiten Niederfrequenzverstärker 74 an den Signalgeber bzw. die schwingungsabgebende Vorrichtung 41 weiterleitet.

In der **Figur 4** ist nun eine alternative Ausführungsform dargestellt. Grundsätzlich besitzt diese die gleichen Elemente 41, 44, 51, 52, 53, 54, 71, 72, 73 beziehungsweise 74. Es kommen jedoch Elemente hinzu.

Diese Ausführungsform ist dann mit Nutzen einsetzbar, wenn es gelingt, eine gemeinsame Einrichtung als schwingungsabgebende Einrichtung 41 und Messeinrichtung 44 zu nutzen, wenn diese also beispielsweise die gleiche Membran und auch weitere identische Elemente nutzen können. In diesem Falle wird eine entsprechende Ansteuerung und Umschaltung eingesetzt, um die Nutzung für verschiedene Einsatzzwecke zu steuern.

Man sieht daher hier zusätzlich eine Einrichtung 75 zur Synchronisation bzw. als Signalwegeumschalter. Dieser Einrichtung 75 werden einerseits die Daten der Messeinrichtung 44 zugeführt bzw. sie gibt die Daten des elektronischen Signalgenerators 51 an die schwingungsabgebende Einrichtung 41 weiter. Sie sorgt dafür, dass die Membran jeweils als Sender- oder als Empfängerelement genutzt werden kann.

Die Einrichtung 75 kann nun zusätzlich auch direkt auf die anderen Elemente einwirken bzw. von diesen Daten und Informationen erhalten und ermöglicht dadurch eine noch direktere bzw. aufschlussreichere Auswertung.

Anstelle der beiden völlig getrennten Signalwege in der Figur 3 werden jetzt der das Signal erzeugende und der das Signal auswertende Zweig über einen elektronischen Umschalter in Form der Einrichtung 75 zusammengeschaltet. Diese Einrichtung 75 verfügt über eine eigene Intelligenz. In Abhängigkeit der im Signalgenerator 51 eingestellten Parameter, die vom Aufbau des Bohrlochs 10 und einer maximal möglichen Endtiefe der Spiegelteufe 13 abhängig eingestellt werden, muss die Einrichtung 75 den Sendezweig im richtigen Moment abschalten und den Empfangszweig aktivieren.

Aufgrund der unterschiedlichen Parametereinstellungen ist dieser Vorgang zeitlich variabel. Gleichwohl ist es möglich, in Phasen genau zum Sendesignal zu betreiben.

Derartige Umschalter existieren im Bereich der Radartechnik, sind aber erfindungsgemäß auch für den Niederfrequenzbereich modifizierbar.

Eine Geräuschmusteranalyse kann gleichwohl stattfinden, auch wenn die Spiegelteufenmessung aktiviert ist. Lediglich für die Zeit des Aussendens des Erregersignals wird die Geräuschmusteranalyse kurz unterbrochen.

In der Ausführungsform der **Figur 4** ist eine Spiegelteufenmessung also mit nur einem Kombinationssensor möglich.

### Bezugszeichenliste

- 10: Bohrloch
- 11: Erdoberfläche
- 12: Rohöl
- 13: Grenzschicht bzw. Spiegelteufe
- 14: gasförmiges Medium

- 20: Rohrleitung
- 21: Innenrohr
- 22: Außenrohr
- 23: Rohrverbindungen

- 30: Pumpe
- 31: Rohrleitung

- 40: Vorrichtung
- 41: schwingungsabgebende Einrichtung
- 42: Signalmuster beziehungsweise Druckwellen
- 43: rücklaufende Signalmuster beziehungsweise Druckwellen
- 44: Messeinrichtung

- 51: elektronischer Signalgenerator
- 52: elektronische Analyseeinheit
- 53: Speichereinheit
- 54: Anzeigeeinheit
- 55: Fernübertragungseinrichtung
- 56: externer Signalaufnehmer

- 60: Druckgehäuse
- 61: Eisenkern
- 62: Balg
- 63: Impulsmagnet
- 64: Membran
- 65: Absperrhahn

- 71: Niederfrequenzverstärker
- 72: Einheit für eine Geräuschmusteranalyse
- 73: Einheit für eine Spiegelteufenermittlung
- 74: zweiter Niederfrequenzverstärker
- 75.: Einrichtung

## Patentansprüche

1. Verfahren zur Erkennung der Lage einer Spiegelteufe (13) in einem Bohrloch (10) bei Tiefbohrungen,
bei dem man an der Erdoberfläche (11) ein akustisches Ereignis gezielt stattfinden lässt, welches akustische Ereignis Druckwellen erzeugt,
bei dem die von dem Ereignis erzeugten Druckwellen in dem Bohrloch (10) in die Tiefe laufen,
bei dem die in das Bohrloch (10) laufenden Druckwellen zumindest auch an der Spiegelteufe (13) reflektiert werden,
bei dem an der Erdoberfläche (11) aus dem Bohrloch (10) dorthin laufende Druckwellen aufgefangen werden und die Laufzeit seit dem akustischen Ereignis gemessen werden,
bei dem die aufgefangenen und gemessenen Druckwellen ausgewertet werden und zusammen mit der zugehörigen Laufzeit auf die Lage der Spiegelteufe (13) geschlossen wird,
**dadurch gekennzeichnet,**
**dass** das akustische Ereignis ein Signalmuster (42) mit einem vorgegebenen, zeitlich veränderlichen Frequenzspektrum erzeugt,
**dass** das Signalmuster (42) als Schwingungsereignis in das Bohrloch (10) abgestrahlt wird, in die Tiefe läuft und reflektiert wird,
**dass** an der Erdoberfläche (11) aus dem Bohrloch (10) stammende aufgefangene Signale analysiert werden,
**dass** aus den aufgefangenen Signalen bei der Analyse Schwingungsereignisse herausgefiltert werden, die zu dem abgestrahlten Signalmuster (42) korrelieren, und
**dass** aus den zu dem abgestrahlten Signalmuster (42) korrelierenden Schwingungsereignissen (43) unter den aufgefangenen Signalen und der Laufzeit seit der Ausstrahlung des Signalmusters (42) auf die Lage der Spiegelteufe (13) geschlossen wird.

2. Verfahren nach Anspruch 1,
**dadurch gekennzeichnet,**
**dass** aus den zu dem abgestrahlten Signalmuster (42) korrelierenden Schwingungsereignissen (43) unter den aufgefangenen Signalen und der Laufzeit seit der Ausstrahlung des Signalmusters (42) die Zahl von teilreflektierenden Rohrverbindungen (23) der Rohrleitung (20) zwischen der Erdoberfläche (11) und der Spiegelteufe (13) geschlossen wird.

3. Verfahren nach Anspruch 1 oder 2,
**dadurch gekennzeichnet,**
**dass** aus den an der Erdoberfläche (10) aufgefangenen Signalen aus dem Bohrloch (10) Schwingungsereignisse herausgefiltert werden, die zu dem ausgestrahlten Signalmuster (42) nicht korrelieren, und
**dass** aus den herausgefilterten und nicht zu den ausgestrahlten Signalmustern (42) korrelierenden Schwingungsereignissen auf andere Ereignisse im Bohrloch (10) geschlossen wird.

4. Verfahren nach Anspruch 3,
**dadurch gekennzeichnet,**
**dass** an der Erdoberfläche (10) beim Analysieren auf gespeicherte Daten von Schwingungsereignissen zurückgegriffen wird, die anzunehmende Schwingungsereignisse bei vorgegebenen Arbeitsereignissen im Bohrloch (10) betreffen.

5. Verfahren nach Anspruch 4,
**dadurch gekennzeichnet,**
**dass** an der Erdoberfläche (10) beim Analysieren aus Schwingungsereignissen (43), die weder zu dem abgestrahlten Signalmuster (42) korrelierenden Schwingungsereignissen (43) noch zu gespeicherten Daten von Schwingungsereignissen, die zu zu erwartenden Arbeitsereignissen gehören, passen, auf mögliche Schäden oder sich anbahnende Schäden im Bohrloch (10) geschlossen wird.

6. Verfahren nach Anspruch 5,
**dadurch gekennzeichnet,**
**dass** niederfrequente Signalmuster eingesetzt werden.

7. Verfahren nach Anspruch 6,
**dadurch gekennzeichnet,**
**dass** Frequenzen zwischen 5 Hz und 1000 Hz eingesetzt werden.

8. Verfahren nach Anspruch 7,
**dadurch gekennzeichnet,**
**dass** Frequenzen zwischen 5 Hz und 100 Hz eingesetzt werden.

9. Verfahren nach einem der vorstehenden Ansprüche,
**dadurch gekennzeichnet,**
**dass** eine kontinuierliche oder eine in regelmäßigen oder vorgegebenen Abständen automatisch durchgeführte Abstrahlung von Signalmustern (42) mit einem vorgegebenen, zeitlich veränderlichen Frequenzspektrum und eine zugehörige Messung und Auswertung erfolgt.

10. Verfahren nach einem der vorstehenden Ansprüche,
**dadurch gekennzeichnet,**
**dass** aus dem ermittelten Wert für die Lage der Spiegelteufe (13) und einem vorgegebenen Sollwert der Lage der Spiegelteufe und/oder früheren ermittelten Werten für die Lage der Spiegelteufe (13) ein Regelsignal für die Regelung der Leistung einer Fördereinrichtung am Bohrloch (10) erzeugt wird.

11. Vorrichtung zur Durchführung des Verfahrens nach einem der vorstehenden Ansprüche,
**dadurch gekennzeichnet,**
**dass** an der Erdoberfläche (11) eine schwingungsabgebende Einrichtung (41) vorgesehen ist, die Signalmuster (42) mit einem vorgegebenen, zeitlich veränderlichen Frequenzspektrum erzeugt und in das Bohrloch (10) abstrahlt,
**dass** eine Messeinrichtung (44) zum Empfangen von aus dem Bohrloch (10) stammenden Signalen angeordnet und aufgebaut ist,
**dass** eine elektronische Analyseeinheit (52) vorgesehen ist, die die von der Messeinrichtung (44) aufgefangenen Signale analysiert und so aufgebaut ist, dass sie zu den abgestrahlten Signalmustern (42) korrelierende Schwingungsereignisse (43) ermittelt und aus diesen korrelierenden Schwingungsereignissen und der Laufzeit auf die Lage der Spiegelteufe (13) schließt.

12. Vorrichtung nach Anspruch 11,
**dadurch gekennzeichnet,**
**dass** die Schwingungsabgebende Einrichtung (41) von einem elektronischen Signalgenerator (51) mit den elektronisch generierten Signalmustern versorgt wird, die in der schwingungsabgebenden Einrichtung (41) in Schwingungsereignisse umgesetzt werden.

13. Vorrichtung nach Anspruch 11 oder 12,
**dadurch gekennzeichnet,**
**dass** die elektronische Analyseeinheit (52) mit einer Speichereinheit (53) verbunden ist, die Auswertungsergebnisse speichert und/oder gespeicherte - Daten von Schwingungsereignissen enthält, die anzunehmende Schwingungsereignisse bei vorgegebenen Arbeitsereignissen und/oder bei möglichen Schadereignissen enthält.

14. Vorrichtung nach einem der Ansprüche 11 bis 13,
**dadurch gekennzeichnet,**
**dass** eine Fernübertragungseinrichtung (55) vorgesehen ist, die eine Fernübertragung aufgenommener und/oder ausgewerteter Ergebnisse vornimmt.

15. Vorrichtung nach einem der Ansprüche 11 bis 14,
**dadurch gekennzeichnet,**
**dass** die schwingungsabgebende Einrichtung (41) einen Dauermagneten und eine Erregerspule an einer schwingenden Membran aufweist.

16. Vorrichtung nach einem der Ansprüche 11 bis 15,
**dadurch gekennzeichnet,**
**dass** die schwingungsabgebende Einrichtung (41) und die Messeinrichtung (44) zumindest teilweise auf identische Elemente zurückgreifen.

## Claims

1. Method for logging the location of a fluid depth (13) in a wellbore (10) during deep drilling,
in which an acoustic event is allowed to take place in a specific manner at the ground surface (11), said acoustic event generating pressure waves,
in which the pressure waves generated by the event travel downward in the wellbore (10),
in which the pressure waves traveling into the wellbore (10) are reflected at least also at the fluid depth (13),
in which pressure waves traveling out of the wellbore (10) to the ground surface (11) are picked up there and the time of travel since the acoustic event is measured,
in which the picked-up and measured pressure waves are analyzed and used, together with the associated time of travel, to determine the location of the fluid depth (13),
**characterized**
**in that** the acoustic event generates a signal pattern (42) having a predetermined, time-variable frequency spectrum,
**in that** the signal pattern (42) is emitted as a vibration event into the wellbore (10), travels downward, and is reflected,
**in that** signals originating from the wellbore (10) and picked up at the ground surface (11) are analyzed,
**in that** vibration events that correlate with the emitted signal pattern (42) are filtered out of the picked-up signals during the analysis, and in that, from the vibration events (43) that are among the picked-up signals and correlate with the emitted signal pattern (42) and from the time of travel since the emission of the signal pattern (42), the location of the fluid depth (13) is deduced.

2. The method according to claim 1,
further **characterized**
**in that**, from the vibration events (43) that are among the picked-up signals and correlate with the emitted signal pattern (42) and from the time of travel since the emission of the signal pattern (42), the number of partially reflecting pipe joints (23) of the piping (20) between the ground surface (11) and the fluid depth (13) is deduced.

3. The method according to claim 1 or 2,
further **characterized**
**in that**, from the signals from the wellbore (10) that are picked up at the ground surface (10), vibration events that do not correlate with the emitted signal pattern (42) are filtered out and
**in that**, from the vibration events that are filtered out and do not correlate with the emitted signal patterns (42), other events in the wellbore (10) are deduced.

4. The method according to claim 3,
further **characterized**
**in that**, at the ground surface (10), recourse is had during the analysis to stored data of vibration events that relate to presumed vibration events during the predetermined working events in the wellbore (10).

5. The method according to claim 4,
further **characterized**
**in that**, at the ground surface (10) during the analysis, possible damage or threatening damage in the wellbore (10) is deduced from vibration events (43) that fit neither vibration events (43) correlating with the emitted signal pattern (42) nor stored data of vibration events that belong to the working events.

6. The method according to claim 5,
further **characterized**
**in that** low-frequency signal patterns are used.

7. The method according to claim 6,
further **characterized**
**in that** frequencies between 5 Hz and 1000 Hz are used.

8. The method according to claim 7,
further **characterized**
**in that** frequencies between 5 Hz and 100 Hz are used.

9. The method according to one of the preceding claims,
further **characterized**
**in that** a continuous emission of signal patterns (42) or an emission that is carried out automatically in regular or predetermined intervals, having a predetermined, time-variable frequency spectrum, and an associated measurement and analysis takes place.

10. The method according to one of the preceding claims,
further **characterized**
**in that**, from the determined value for the location of the fluid depth (13) and a predetermined target value of the location of the fluid depth and/or earlier determined values for the location of the fluid depth (13), a control signal for regulating the power of an extracting device at the wellbore (10) is generated.

11. Device for carrying out the method according to one of the preceding claims,
**characterized**
**in that**, at the ground surface (11), a vibration-emitting device (41) is provided, which generates the signal patterns (42) with a predetermined, time-variable frequency spectrum and emits them into the wellbore (10)
**in that** a measuring device (44) for receiving signals originating from the wellbore (10) is arranged and set up,
**in that** an electronic analysis unit (52) is provided, which analyzes signals picked up by the measuring device (44) and is set up so that the vibration events correlating with the emitted signal patterns (42) are deduced and, from these correlating vibration events and the time of travel, the location of the fluid depth (13) is deduced.

12. The device according to claim 11,
further **characterized**
**in that** the vibration-emitting device (41) is supplied by an electronic signal generator (51) with the electronically generated signal patterns, which are converted to vibration events in the vibration-emitting device (41).

13. The device according to claim 11 or 12,
further **characterized**
**in that** the electronic analysis unit (52) is connected to a memory storage unit (53), which stores the analysis events and/or contains the stored data from the vibration events that include the presumed vibration events for predetermined working events and/or for possible damage events.

14. The device according to one of claims 11 to 13,
further **characterized**
**in that** a remote transmission device (55) is provided, which effects a remote transmission of picked-up and/or analyzed events.

15. The device according to one of claims 11 to 14
further **characterized**
**in that** the vibration-emitting device (41) has a permanent magnet and an excitation coil at a vibrating membrane.

16. The device according to one of claims 11 to 15,
further **characterized**
**in that** the vibration-emitting device (41) and the measuring device (44) have recourse at least in part to identical elements.

## Revendications

1. Procédé pour la reconnaissance de la position d'un niveau de puits (13) dans un trou de forage (10) en cas de forages profonds,
dans lequel on laisse un événement acoustique avoir lieu de manière ciblée à la surface terrestre (11), lequel événement acoustique génère des ondes de pression,
dans lequel les ondes de pression générées par l'événement se propagent en profondeur dans le trou de forage (10),
dans lequel les ondes de pression se propageant dans le trou de forage (10) sont au moins également réfléchies sur le niveau du puits (13),
dans lequel les ondes de pression se propageant hors du trou de forage (10) vers la surface terrestre sont captées à la surface terrestre (11) et le temps de propagation depuis l'événement acoustique étant mesuré,
dans lequel les ondes de pression captées et mesurées sont évaluées et la position du niveau de puits (13) en étant déduite ensemble avec le temps de propagation correspondant,
**caractérisé en ce**
**que** l'événement acoustique génère un modèle de signal (42) avec un spectre de fréquences prédéfini variable dans le temps,
en ce que le modèle de signal (42) est émis en tant qu'événement de vibration dans le trou de forage (10), se propage en profondeur et est réfléchi,
en ce que l'on analyse des signaux captés à la surface terrestre (11) provenant du trou de forage (10),
en ce qu'à partir des signaux captés, des événements de vibration sont filtrés lors de l'analyse, lesquels sont en corrélation avec le modèle de signal (42) émis, et
en ce qu'à partir des événements de vibration (43) en corrélation avec le modèle de signal (42) émis parmi les signaux captés et du temps de propagation depuis l'émission du modèle de signal (42), on en déduit la position du niveau du puits (13).

2. Procédé selon la revendication 1,
**caractérisé en ce**
**qu'**à partir des événements de vibration (43) en corrélation avec le modèle de signal (42) émis parmi les signaux captés et du temps de propagation depuis l'émission du modèle de signal (42), on en déduit le nombre de raccords de canalisation (23) à réflexion partielle de la canalisation (20) entre la surface terrestre (11) et le niveau du puits (13).

3. Procédé selon la revendication 1 ou 2,
**caractérisé en ce**
**que** l'on filtre à partir des signaux provenant du trou de forage (10) captés à la surface terrestre (10) des événements de vibration qui ne sont pas en corrélation avec le modèle de signal (42) émis, et
en ce qu'à partir des événements de vibration filtrés et non en corrélation avec les modèles de signal (42) émis, on en déduit d'autres événements dans le trou de forage (10).

4. Procédé selon la revendication 3,
**caractérisé en ce**
**qu'**à la surface terrestre (10), lors de l'analyse, on a recours à des données enregistrées d'événements de vibration, lesquelles concernent des événements de vibration prévisibles lors d'événements de travail prédéfinis dans le trou de forage (10).

5. Procédé selon la revendication 4,
**caractérisé en ce**
**qu'**à la surface terrestre (10), lors de l'analyse, on déduit, à partir d'événements de vibration (43) qui ne vont ni avec les événements de vibration (43) en corrélation avec le modèle de signal (42) émis, ni avec des données enregistrées d'événements de vibration appartenant à des événements de travail prévisibles, des dommages possibles ou des dommages en préparation dans le trou de forage (10).

6. Procédé selon la revendication 5,
**caractérisé en ce**
**que** l'on utilise des modèles de signal de basse fréquence.

7. Procédé selon la revendication 6,
**caractérisé en ce**
**que** l'on utilise des fréquences comprises entre 5 Hz et 1000 Hz.

8. Procédé selon la revendication 7,
**caractérisé en ce**
**que** l'on utilise des fréquences comprises entre 5 Hz et 100 Hz.

9. Procédé selon l'une des revendications précédentes,
**caractérisé en ce**
**qu'**il y a une émission de modèles de signal (42) en continu ou bien réalisée automatiquement à intervalles réguliers ou prédéfinis avec un spectre de fréquences prédéfini variable dans le temps et une mesure et évaluation associée.

10. Procédé selon l'une des revendications précédentes,
**caractérisé en ce**
**que** l'on génère, à partir de la valeur déterminée pour la position du niveau du puits (13) et d'une valeur de consigne prédéfinie de la position du niveau du puits et/ou de valeurs déterminées antérieurement pour la position du niveau du puits (13), un signal de réglage pour le réglage de la puissance d'un dispositif de convoyage au trou de forage (10).

11. Dispositif pour réaliser le procédé selon l'une des revendications précédentes,
**caractérisé en ce**
**que** l'on prévoit à la surface terrestre (11) un dispositif émetteur de vibrations (41), lequel génère des modèles de signal (42) avec un spectre de fréquences prédéterminé variable dans le temps et l'émet dans le trou de forage (10),
en ce qu'un dispositif de mesure (44) pour la réception de signaux provenant du trou de forage (10) est disposé et monté,
en ce qu'une unité d'analyse électronique (52) est prévue, laquelle analyse les signaux captés par le dispositif de mesure (44) et est conçue de manière à déterminer des événements de vibration (43) en corrélation avec les modèles de signal (42) émis et à déduire à partir de ces événements de vibration en corrélation et du temps de propagation, la position du niveau du puits (13).

12. Dispositif selon la revendication 11,
**caractérisé en ce**
**que** le dispositif émetteur de vibrations (41) est alimenté par un générateur de signaux électronique (51) avec les modèles de signal générés électroniquement, lesquels sont transformés dans le dispositif émetteur de vibrations (41) en événements de vibration.

13. Dispositif selon la revendication 11 ou 12,
**caractérisé en ce**
**que** l'unité d'analyse électronique (52) est en liaison avec une unité de stockage (53), laquelle stocke des résultats d'évaluation et/ou contient des données enregistrées d'événements de vibration, qui contient des événements de vibration prévisibles lors d'événement de travail prédéfinis et/ou lors d'événements de dommage possibles.

14. Dispositif selon l'une des revendications 11 à 13,
**caractérisé en ce**
**que** l'on prévoit un dispositif de transmission à distance (55), lequel procède à une transmission à distance de résultats enregistrés et/ou évalués.

15. Dispositif selon l'une des revendications 11 à 14,
**caractérisé en ce**
**que** le dispositif émetteur de vibrations (41) présente un aimant permanent et une bobine d'excitation sur une membrane oscillante.

16. Dispositif selon l'une des revendications 11 à 15,
**caractérisé en ce**
**que** le dispositif émetteur de vibrations (41) et le dispositif de mesure (44) ont au moins partiellement recours à des éléments identiques.
